# EUROPÄISCHE PATENTANMELDUNG

(11) **EP 3 417 829 A1**
(43) Veröffentlichungstag der Anmeldung: **26.12.2018**
(21) Anmeldenummer: 18178378.8
(22) Anmeldetag: 18.06.2018
(51) Int. Cl.: A61C 11/00, A61C 13/00

(54) **SOCKELGERÄT ZUM FIXIEREN EINES OBERKIEFERMODELLS UND EINES UNTERKIEFERMODELLS**

(30) Priorität: 19.06.2017 DE 102017005745; 13.11.2017 DE 102017126667
(71) Anmelder: Hirsch, Thomas, 44536 Lünen (DE); Hirsh, Jörg, 44532 Lünen (DE)
(72) Erfinder: Hirsch, Thomas, 44536 Lünen (DE); Hirsh, Jörg, 44532 Lünen (DE)
(74) Vertreter: Bourgeois, Christian

(57) **Zusammenfassung**

Die vorliegende Erfindung betrifft ein Sockelgerät zum Fixieren eines Oberkiefermodells und eines Unterkiefermodells in einer Stellung relativ zueinander, die einer intraoralen Situation entspricht. Das Sockelgerät umfasst eine erste Modellhalteeinheit (2) zum Halten des Oberkiefermodells und eine zweite Modellhalteeinheit (1) zum Halten des Unterkiefermodells,
wobei die erste Modellhalteeinheit (2) eine erste Grundplatte (8) mit einer ersten Halteseite (11), an der das eine Kiefermodell anordbar ist, und wenigstens einen einendig mit der ersten Halteseite (11) verbundenen, quer zur ersten Grundplatte (8) verlaufenden Führungsstab (9) aufweist,
wobei die zweite Modellhalteeinheit (1) eine zweite Grundplatte (5) mit einer zweiten Halteseite (10), an der das andere Kiefermodell anordbar ist, und wenigstens eine an der zweiten Grundplatte (5) ausgebildete Führungsöffnung (4) aufweist, in die der Führungsstab (9) formschlüssig einführbar ist, dadurch gekennzeichnet,
dass der Führungsstab (9) einen mit der ersten Halteseite (11) verbundenen, sich über einen Teil einer Längserstreckung des Führungsstabs (9) erstreckenden Stützabschnitt (6) und einen sich an den Stützabschnitt (6) anschließenden, formschlüssig in die Führungsöffnung (4) einführbaren Führungsabschnitt (7), dessen Querschnittsfläche kleiner als eine Querschnittsfläche des Stützabschnitts (6) ist, aufweist,
dass an einem der ersten Grundplatte (8) fernen Ende des Stützabschnitts (6) wenigstens ein zumindest teilweise umlaufender Vorsprung angeordnet ist, über den der Stützabschnitt (6) in den Führungsabschnitt (7) übergeht, und
dass sich auf der zweiten Halteseite (10) wenigstens ein Führungskanal (3) unmittelbar an die Führungsöffnung (4) anschließt, dessen lichte Querschnittsfläche der Querschnittsfläche der Führungsöffnung (4) entspricht.

## Beschreibung

Die vorliegende Erfindung betrifft ein Sockelgerät zum Fixieren eines Oberkiefermodells und eines Unterkiefermodells sowie die Verwendung des Sockelgeräts zum Fixieren eines Oberkiefermodells und eines Unterkiefermodells in einer Stellung relativ zueinander, die einer intraoralen Situation entspricht.

Sockelgeräte stellen ein zahntechnisches Hilfsmittel dar, womit dreidimensional orientierte Ober- und Unterkiefermodelle fixiert werden können. Dadurch kann die intraorale Situation für einen Zahntechniker oder Zahnarzt dimensionsgerecht dargestellt werden. Des Weiteren dienen die Sockelgeräte der Fixierung der Kiefermodelle zur Darstellung der physiologischen Okklusion.

In DE 12 99 096 A wird ein Gerät zum Sockeln eines Kiefermodells beschrieben, welches mit einer Grundplatte und an ihr befestigten, senkrecht zu der Grundplatte verlaufenden Führungssäulen ausgestattet ist. Die WO 2014/170499 A1 offenbart ein Sockelgerät umfassend zwei parallel ausgerichtete Grundplatten und eine dazwischenliegende Stütze. Weiterhin sind im Stand der Technik Sockelgeräte bekannt, bei denen die Fixierung der Modelle in den Sockelschalen durch Gummibänder erfolgt. Diese Art der Fixierung hat jedoch den Nachteil, dass die Modelle leicht verrutschen können, was insbesondere beim Öffnen und Schließen des Sockelgeräts erfolgen kann. Dadurch verschieben sich die Modelle aus Ober- und Unterkiefer zueinander. Eine exakte Begutachtung der Kiefermodelle ist hierdurch nicht gewährleistet.

DE 89 06 103 U1 beschreibt eine als Fixator bekannte Vorrichtung zum Halten und Fixieren von Ober- und Unterkiefer-Gipsmodellen. Die Modelle weisen Montageschienen auf und werden mittels Schrauben befestigt.

Die Aufgabe der vorliegenden Erfindung bestand darin, ein Sockelgerät zum Fixieren eines Oberkiefermodells und eines Unterkiefermodells bereitzustellen, welches die Nachteile des Standes der Technik nicht aufweist. Das Sockelgerät sollte ein Verschieben der Modelle vermeiden. Die Fixierung sollte einfach handhabbar sein, ohne Gummibänder oder Verschraubungen einsetzten zu müssen. Die Handhabung sollte werkzeuglos möglich sein und eine Zeitersparnis bei der Erstellung der interoralen Position einbringen. Das Sockelgerät sollte es ermöglichen, die Kiefermodelle in eine lagerrichtige Position zu bringen, die reproduzierbar hergestellt werden kann.

Demgemäß wurde ein Sockelgerät nach Anspruch 1 gefunden, welches ein Fixieren eines Oberkiefermodells und eines Unterkiefermodells in einer Stellung relativ zueinander ermöglicht, die einer intraoralen Situation entspricht. Das Sockelgerät umfasst eine erste Modellhalteeinheit zum Halten des Oberkiefermodells und eine zweite Modellhalteeinheit zum Halten des Unterkiefermodells.

Die erste Modellhalteeinheit weist eine erste Grundplatte mit einer ersten Halteseite auf, an der das eine Kiefermodell anordbar ist, und wenigstens einen einendig mit der ersten Halteseite verbundenen, quer zur ersten Grundplatte verlaufenden Führungsstab. Die erste Halteseite kann das jeweilige Kiefermodell teilweise unmittelbar aufnehmen. Die Formulierung "mit der Halteseite verbunden" ist derart zu verstehen, dass der Führungsstab, vorzugsweise vollständig, auf der Seite der ersten Grundplatte angeordnet ist, auf der sich die erste Halteseite befindet.

Die zweite Modellhalteeinheit umfasst eine zweite Grundplatte mit einer zweiten Halteseite, an der das andere Kiefermodell anordbar ist, und wenigstens eine an der zweiten Grundplatte ausgebildete Führungsöffnung, in die der Führungsstab formschlüssig einführbar ist. Die Führungsöffnung ist vorzugsweise quer, insbesondere senkrecht, zur zweiten Grundplatte ausgerichtet. Die zweite Halteseite kann das jeweilige Kiefermodell teilweise unmittelbar aufnehmen.

Die Kiefermodelle können in handelsüblichen Sockelschalen gefertigt werden, wie sie beispielsweise von der Dr. Hinz Dental-Vertriebsgesellschaft angeboten werden. Dementsprechend können die Halteseiten der Modellhalteeinheiten Modellaufnahmen aufweisen, die die Grundform der handelsüblichen siebeneckigen Sockelschalen haben. Hierdurch wird ein Verrutschen der Kiefermodelle in den Modellhalteinheiten unterbunden.

Das Sockelgerät ist gekennzeichnet dadurch, dass der Führungsstab einen mit der ersten Halteseite verbundenen, sich über einen Teil einer Längserstreckung des Führungsstabs erstreckenden Stützabschnitt und einen sich an den Stützabschnitt anschließenden, formschlüssig in die Führungsöffnung einführbaren Führungsabschnitt, dessen Querschnittsfläche kleiner als eine Querschnittsfläche des Stützabschnitts ist, aufweist, dass an einem der ersten Grundplatte fernen Ende des Stützabschnitts wenigstens ein zumindest teilweise umlaufender Vorsprung angeordnet ist, über den der Stützabschnitt in den Führungsabschnitt übergeht, und dass sich auf der zweiten Halteseite wenigstens ein Führungskanal unmittelbar an die Führungsöffnung anschließt, dessen lichte Querschnittsfläche der Querschnittsfläche der Führungsöffnung entspricht. Durch den zumindest teilweise umlaufenden Vorsprung der ersten Modellhalteeinheit wird eine Art Anschlag gebildet, auf dem die zweite Modellhalteeinheit, insbesondere deren Führungskanal, aufliegen kann. Die lichte Querschnittsfläche der Führungsöffnung stellt die Öffnung in dem Führungskanal dar.

Das erfindungsgemäße Sockelgerät ermöglicht eine schnelle, einfache und werkzeuglose Fixierung der Kiefermodelle. Zudem sind die beiden Modellhalteeinheiten einfach und schnell voneinander lösbar, um sie für neue Kiefermodelle einsetzen zu können. Diese Vorteile werden insbesondere durch die formschlüssige Steckverbindung zwischen den Modellhalteeinheiten des Sockelgeräts realisiert. Es kann auf weitere mechanische Mittel zum Verbinden der beiden Modellhalteeinheiten miteinander vollständig verzichtet werden.

Im Folgenden wird die Erfindung unter Bezugnahme auf die beigefügten Figuren anhand einer bevorzugten Ausführungsform beispielhaft erläutert, wobei die nachfolgend erläuterten Merkmale sowohl jeweils für sich genommen als auch in Kombination von wenigstens zwei dieser Merkmale miteinander eine vorteilhafte bzw. bevorzugte Weiterbildung der Erfindung darstellen können.

### Kurze Beschreibung der Figuren

- Figur 1: zeigt eine schematische Seitenansicht einer zweiten Modellhalteeinheit eines Ausführungsbeispiels für ein erfindungsgemäßes Sockelgerät.
- Figur 2: zeigt eine schematische Draufsicht der in Figur 1 gezeigten zweiten Modellhalteeinheit.
- Figur 3: zeigt eine weitere schematische Seitenansicht der in den Figuren 1 und 2 gezeigten zweiten Modellhalteeinheit.
- Figur 4: zeigt eine schematische und perspektivische Darstellung der in den Figuren 1 bis 3 gezeigten zweiten Modellhalteeinheit von schräg oben.
- Figur 5: zeigt eine schematische Seitenansicht einer ersten Modellhalteeinheit des Ausführungsbeispiels für das erfindungsgemäße Sockelgerät.
- Figur 6: zeigt eine schematische Draufsicht der in Figur 5 gezeigten ersten Modellhalteeinheit.
- Figur 7: zeigt eine weitere schematische Seitenansicht der in den Figuren 5 und 6 gezeigten ersten Modellhalteeinheit.
- Figur 8: zeigt eine schematische und perspektivische Darstellung der in den Figuren 5 bis 7 gezeigten ersten Modellhalteeinheit von schräg oben.

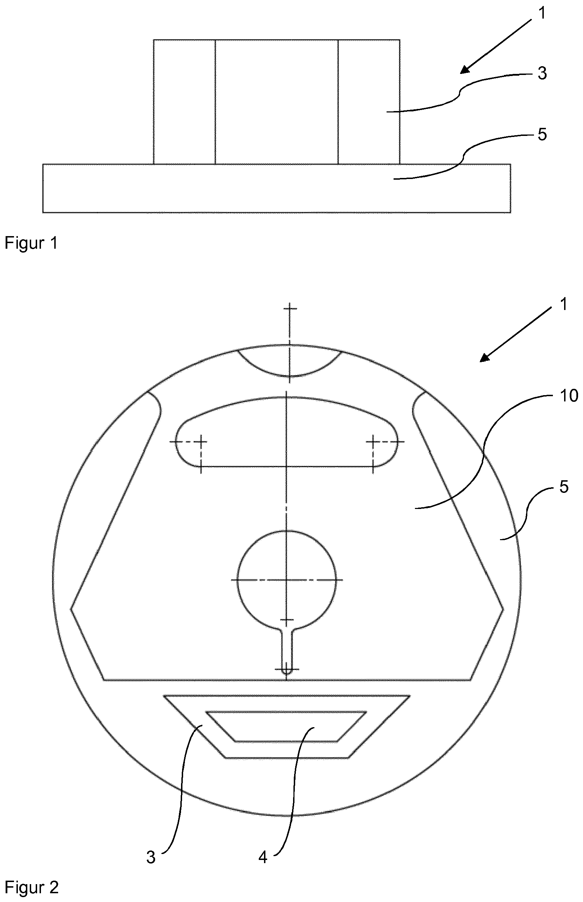

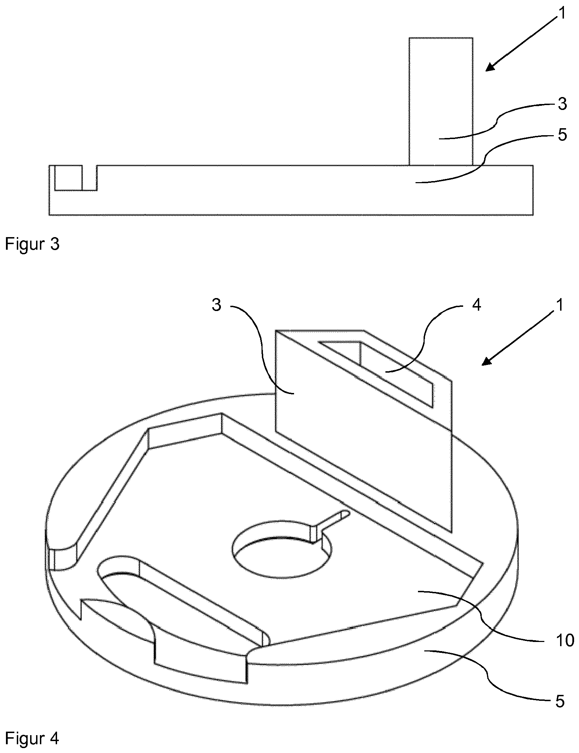

In Figuren 1 bis 4 wird die zweite Modellhalteeinheit (1) zum Halten eines Unterkiefermodells dargestellt. In den Figuren 1 und 3 ist die Einheit in der Vorder- und Seitenansicht zu sehen, wobei der Führungskanal (3) und die Grundplatte (5) erkennbar sind. Der Führungskanal (3) ist quer zur Grundplatte (5) ausgerichtet. Die Draufsicht (Figur 2) zeigt neben Grundplatte (5), Halteseite (10) und Führungskanal (3) die Führungsöffnung (4) in dem Führungskanal (3). Die Halteseite (1) weist eine Modellaufnahme auf, die in einer Form ausgestaltet ist, die der Grundform handelsüblicher Sockelschalen entspricht und entsprechend geformte Modelle aufnehmen kann. Figur 4 demonstriert die zweite Modellhalteeinheit in Schrägansicht. Auf derjenigen Seite der Grundplatte (5), auf der die Halteseite (1) angeordnet ist, befindet sich die Führungsöffnung (4). Unmittelbar an die Führungsöffnung (4) schließt sich der Führungskanal (3) an, dessen lichte Querschnittsfläche der Querschnittsfläche der Führungsöffnung entspricht. Somit bildet der Führungskanal (3) die Führungsöffnung (4).

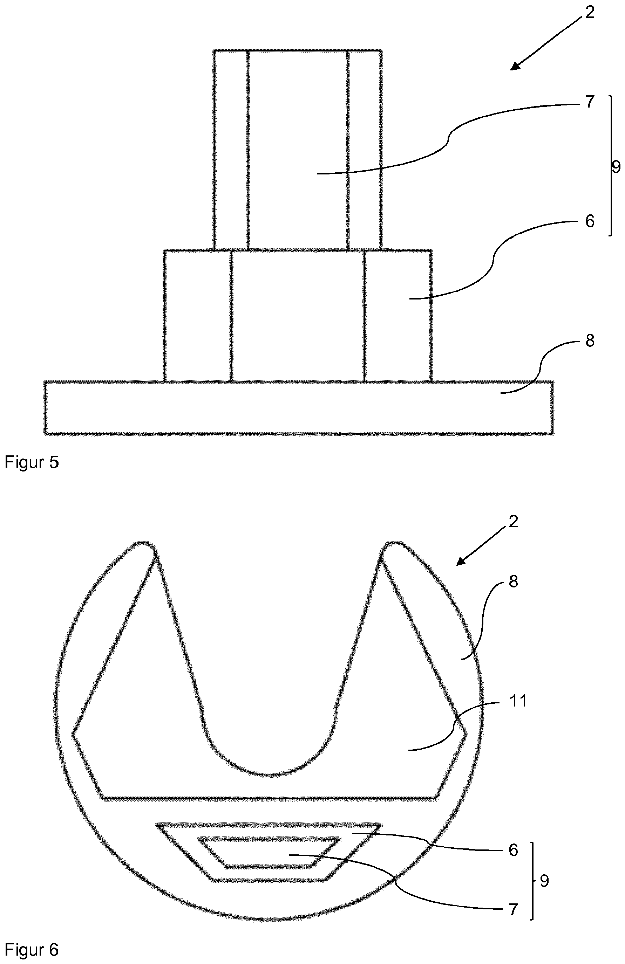

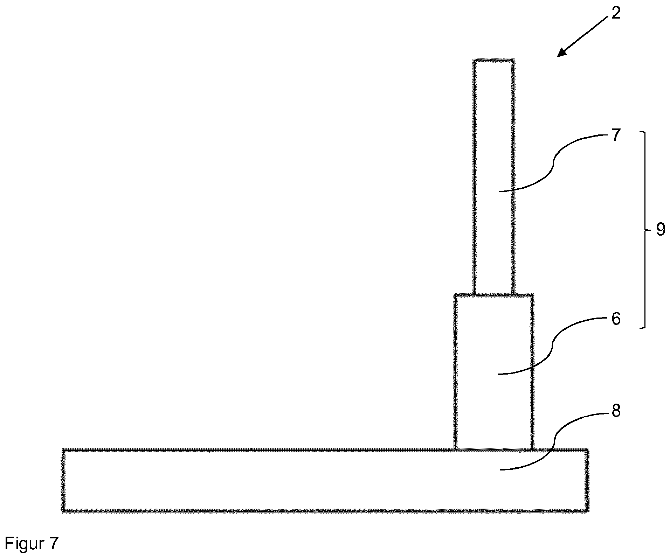

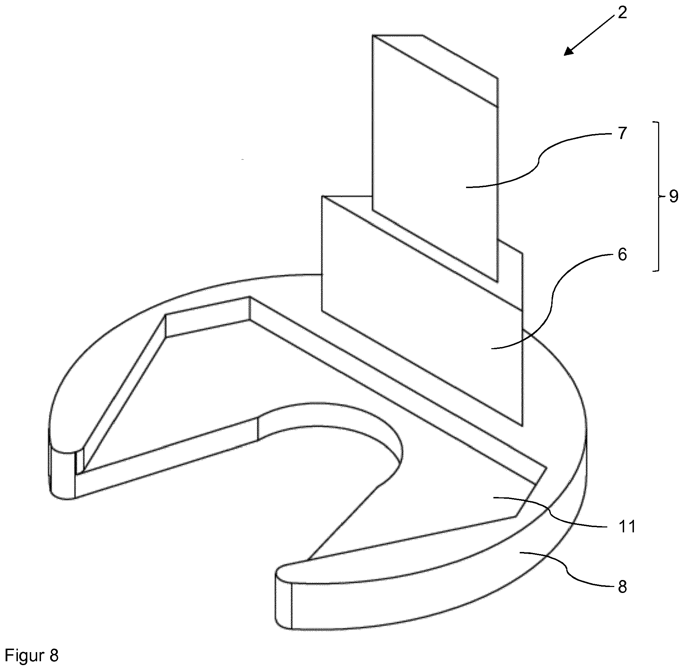

Die erste Modellhalteeinheit (2) zum Halten eines Oberkiefermodells werden in Figuren 5 bis 8 dargestellt. Die Vorderansicht in Figur 5 und die Seitenansicht in Figur 7 lässt die Grundplatte (8) sowie den Führungsstab (9) erkennen. Der Führungsstab (9) ist quer mit der Grundplatte (8) verbunden. Der Führungsstab (9) erstreckt sich, ausgehend von der Grundplatte (8), über einen Stützabschnitt (6) und einen sich an den Stützabschnitt (6) anschließenden Führungsabschnitt (7). Figur 6 stellt die Draufsicht der ersten Einheit (2) mit Grundplatte (8), Stützabschnitt (6) und Führungsabschnitt (7) sowie Halteseite (11) dar. Auch hier ist die Modellaufnahme der Halteseite (11) den handelsüblichen Sockelschalen angepasst. Figur 8 demonstriert die Seitenansicht der ersten Modellhalteeinheit (2). Der zumindest teilweise umlaufende Vorsprung an dem der ersten Grundplatte (8) fernen Ende des Stützabschnitts (6) ist in dieser Darstellung erkennbar, welcher hier als vollständig umlaufender Vorsprung dargestellt ist. Der Führungsstab (9) ist auf derjenigen Seite der Grundplatte (8) angeordnet, an der sich die Halteseite (11) befindet. Der Führungsabschnitt (7) kann formschlüssig in die Führungsöffnung (4) der zweiten Modellhalteeinheit (1) eingeführt werden.

Die Grundformen des Führungsabschnitts (7) sowie der Führungsöffnung (4) sind trapezsymmetrisch ausgebildet. Der Stützabschnitt (6) weist die gleiche Form auf.

### Weitere Ausgestaltungen der Erfindung

Vorzugsweise entspricht eine Länge des Führungskanals (3) einer Länge des Stützabschnitts (6). Insofern ist es bevorzugt, dass die Länge des Führungskanals (3) der Länge des Stützabschnitts (6) entspricht. Hierdurch sind die beiden Modellhalteeinheiten derart dimensioniert, dass ein Aufeinanderliegen der beiden Kiefermodelle gewährleistet werden kann.

Es ist bevorzugt, dass die Modellhalteeinheiten (1, 2) wenigstens eine entweder an dem Führungsstab (9) und Führungskanal (3) angreifende oder durch den Führungsstab (9) und Führungskanal (3) gebildete Verdrehsicherung aufweisen. Diese Maßnahme bildet einen Schutz gegen eine Verdrehung um die Längsmittelachse des Führungsstabes (9). Die Verdrehsicherung bietet den Vorteil, dass die interorale Position rasch eingestellt werden und nicht verrutschen kann. Besonders bevorzugt weisen Führungsstab (9) und Führungsöffnung (4) jeweils eine polygonale Querschnittsfläche, idealerweise die gleiche, auf. Ganz besonders bevorzugt sind jeweils trapezförmige Querschnittsflächen, insbesondere trapezsymmetrische Querschnittsflächen. Idealerweise weist zumindest der Führungsabschnitt (7) des Führungsstabs (9) die zuvor genannten Querschnittsflächen auf.

Weitere bevorzugte Verdrehsicherungen sind Führungsnut und Führungsvorsprung oder -nase an Führungsstab (9) und in dem Führungskanal (3), die über einen Teil oder über die gesamte Länge von Führungsstab (9) und/oder Führungskanal (3) ausgebildet sein können.

Weiterhin ist es bevorzugt, dass eine äußere Formgebung des Stützabschnitts (6) einer äußeren Formgebung des Führungskanals (3) entspricht. Hierdurch kann sich der Führungskanal (3) großflächig axial an dem Stützabschnitt abstützen. Hierbei ist eine vollständig umlaufende Kontaktfläche (umlaufende Schulter) besonders bevorzugt, um den ineinander gesteckten Modellhalteeinheiten (1, 2) einen besonders hohen und sicheren Halt zu geben.

Das Sockelgerät ist vorteilhafterweise derart ausgestaltet, dass an der jeweiligen Halteseite (10, 11) der jeweiligen Grundplatte (5, 8) eine Modellaufnahme derart ausgebildet ist, dass das jeweilige Kiefermodell unter Ausbildung eines Presssitzes oder Klemmsitzes zwischen dem Kiefermodell und der Grundplatte teilweise in die Modellaufnahme einfügbar ist. Der Vorteil des Press- bzw. Klemmsitzes liegt darin, dass die Modelle im Gegensatz zur Gummibandfixierung des Standes der Technik nicht verrutschen. Vorzugsweise ist an der jeweiligen Halteseite (10, 11) der jeweiligen Grundplatte (5, 8) eine Modellaufnahme derart ausgebildet, dass das jeweilige Kiefermodell ausschließlich unter Ausbildung eines Presssitzes oder Klemmsitzes zwischen dem Kiefermodell und der Grundplatte (5, 8) teilweise in die Modellaufnahme einfügbar ist. Dies soll bedeuten, dass das jeweilige Kiefermodell an der jeweiligen Grundplatte (5, 8) fixiert werden kann, ohne dass hierzu mechanische Mittel, wie beispielsweise Schrauben oder dergleichen, erforderlich sind.

Die Modellhalteeinheiten (1, 2) können monolithisch ausgebildet sein. Die Einheiten können bspw. ein Spritzgussbauteil oder ein schichtförmig aufgebauter Gegenstand aus einem dreidimensionalen Druckverfahren sein. Die Modellhalteeinheiten (1, 2) sind vorzugsweise aus einem Kunststoff hergestellt, wobei thermoplastische Polymere wie Polyethylen, Polypropylen, Polyvinylchlorid oder Polyamid eingesetzt werden können. Besonders bevorzugt sind transparente thermoplastische Polymere wie Polycarbonat, Polyetherimid, Polymethylmethacrylat oder Polysulfon.

Die Grundplatten (5, 8) der Modellhalteeinheiten (1, 2) können wenigstens eine randseitige Ausnehmung oder eine Durchbrechung aufweisen. Hierdurch kann die Positionierung des jeweiligen Kiefermodells in den jeweiligen Modellhalteeinheiten kontrolliert werden. Hierbei ist es bevorzugt, wenn zumindest in einer Grundplatte (5, 8), vorzugsweise in der Grundplatte (5) der zweiten Modellhalteeinheit (1), eine radiale Durchbrechung vorhanden ist. Die radiale Durchbrechung verläuft besonders bevorzugt senkrecht zu der Ebene von Führungskanal (3) bzw. Führungsstab (9). Eine derartige radiale Durchbrechung ist bspw. in Figuren 2 und 4 erkennbar. Sofern die Modellhalteeinheit (1, 2) aus transparentem Material gefertigt wurde, kann eine Durchbrechung entfallen. In diesem Fall ist eine Markierungslinie hilfreich.

Ein weiterer Gegenstand der Erfindung ist die Verwendung des zuvor beschriebenen erfindungsgemäßen Sockelgeräts zum Fixieren eines Oberkiefermodells und eines Unterkiefermodells in einer Stellung relativ zueinander, die einer intraoralen Situation entspricht. Dies ermöglicht die Begutachtung der intraoralen Situation.

Ein weiterer Gegenstand der Erfindung ist ein Arbeitsverfahren zur Herstellung der intraoralen Situation mittels erfindungsgemäßem Sockelgerät. Zunächst wird eine Sockelschale, bspw. befüllt mit Gips, und ein Oberkiefermodell in die Halteseite (11) der Modellhalteeinheit (2) eingebracht. Der Gips weist üblicherweise eine cremig-stabile Konsistenz auf. Im Anschluss wird die Modellhalteeinheit (1) mittels Führungsöffnung auf den Führungsstab (7) aufgesetzt. Führungsöffnung (3) und Führungsstab (9) zeigen in die gleiche Richtung, die beiden Grundplatten (5,8) sind parallel und übereinander ausgerichtet. Durch die Grundplatte (5) der Modellhalteeinheit (1) wird das Oberkiefermodell in die Sockelschale eingepresst, so dass der Zahnkranz des Oberkiefermodells plan auf der Unterseite der Grundplatte (5) aufliegt. Die optionale Durchbrechung in der Grundplatte (5) dient der optischen Kontrolle der Ausrichtung des Modells. Die Modellhalteeinheit (1) kann abschließend bis zum Anschlag heruntergedrückt werden. Im Anschluss, in der Regel nach dem Aushärten des Gipses, wird die Modellhalteeinheit (1) von der Modellhalteeinheit (2) abgenommen und die Modellhalteeinheit (1) um 180° um die horizontale Achse gedreht, ggf. mit eingebrachter Sockelschale, welche bspw. mit Gips befüllt ist, und erneut auf den Führungsstab (9) aufgesetzt (die Grundplatten (5, 8) diese Konstruktion liegen nun außen, Führungsstab (9) und Führungskanal (3) weisen aufeinander zu). Eine Ausrichtung erfolgt mit Hilfe des Situationsbisses. Die Modellhalteeinheit (1) kann bis zum Anschlag heruntergedrückt werden. Nach Aushärten des Gipses kann das Sockelgerät entfernt und Verbindungsstege zwischen den Kiefermodellen eingesetzt werden. Geeignete Gipse sind beispielsweise Dentalgipse nach EN ISO 6873.

### Bevorzugte Bemaßung

In einer bevorzugten Ausführungsform der Erfindung weisen die Modellhalteeinheiten (1, 2) die folgenden Bemaßungen auf. Sie dienen dem Fachmann als Orientierung zur Herstellung der Einheiten.

Die Grundplatten (5, 8) können einen Durchmesser von 90 bis 100 mm aufweisen, wobei ein Durchmesser von 95 mm bevorzugt ist, um die handelsüblichen Sockelschalen aufnehmen zu können. Ihre Höhe beträgt vorteilhafterweise 8 bis 12 mm, wobei die Modellaufnahmen der Halteseiten (10, 11) in den Grundplatten (5, 8) vorzugsweise eine Tiefe von 4 bis 6 mm haben. Der Führungsabschnitt (7, symmetrisches Trapez) hat vorzugsweise die Maße 16 bis 22 mm x 28 bis 34 mm x 4 bis 8 mm, bevorzugt 19 mm x 31 mm x 6 mm. Der sich anschließende Stützabschnitt (6, symmetrisches Trapez) kann die Maße 22 bis 28 mm x 45 bis 55 mm x 10 bis 15 mm, vorzugsweise 25 mm x 50 mm x 12,5 mm, haben. Die Führungsöffnung (4) der zweiten Modellhalteeinheit (2) weist vorzugsweise die Maße des Führungsabschnitts (7) und der Führungskanal (3) die Maße des Stützabschnitts (6) auf. Die Länge von Führungskanal (3) und Stützabschnitt (6) sind vorteilhafterweise identisch, wobei eine Länge, ausgehend von der Grundplatte (5, 8) idealerweise jeweils 20 bis 30 mm, vorzugsweise 25 mm, beträgt.

### Bezugszeichenliste

- 1: zweite Modellhalteeinheit zum Halten eines Oberkiefermodells
- 2: erste Modellhalteeinheit zum Halten eines Unterkiefermodells
- 3: Führungskanal der zweiten Einheit
- 4: Führungsöffnung der zweiten Einheit
- 5: Grundplatte der zweiten Einheit
- 6: Stützabschnitt der ersten Einheit
- 7: Führungsabschnitt der ersten Einheit
- 8: Grundplatte der ersten Einheit
- 9: Führungsstab der ersten Einheit
- 10: Halteseite der zweiten Einheit
- 11: Halteseite der ersten Einheit

## Patentansprüche

1. Sockelgerät zum Fixieren eines Oberkiefermodells und eines Unterkiefermodells in einer Stellung relativ zueinander, die einer intraoralen Situation entspricht, aufweisend
- eine erste Modellhalteeinheit (2) zum Halten des Oberkiefermodells oder Unterkiefermodells und
- eine zweite Modellhalteeinheit (1) zum Halten des Unterkiefermodells bzw. des Oberkiefermodells,
- wobei die erste Modellhalteeinheit (2) eine erste Grundplatte (8) mit einer ersten Halteseite (11), an der das eine Kiefermodell anordbar ist, und wenigstens einen einendig mit der ersten Halteseite (11) verbundenen, quer zur ersten Grundplatte (8) verlaufenden Führungsstab (9) aufweist,
- wobei die zweite Modellhalteeinheit (1) eine zweite Grundplatte (5) mit einer zweiten Halteseite (10), an der das andere Kiefermodell anordbar ist, und wenigstens eine an der zweiten Grundplatte (5) ausgebildete Führungsöffnung (4) aufweist, in die der Führungsstab (9) formschlüssig einführbar ist, **dadurch gekennzeichnet,**
- **dass** der Führungsstab (9) einen mit der ersten Halteseite (11) verbundenen, sich über einen Teil einer Längserstreckung des Führungsstabs (9) erstreckenden Stützabschnitt (6) und einen sich an den Stützabschnitt (6) anschließenden, formschlüssig in die Führungsöffnung (4) einführbaren Führungsabschnitt (7), dessen Querschnittsfläche kleiner als eine Querschnittsfläche des Stützabschnitts (6) ist, aufweist,
- **dass** an einem der ersten Grundplatte (8) fernen Ende des Stützabschnitts (6) wenigstens ein zumindest teilweise umlaufender Vorsprung angeordnet ist, über den der Stützabschnitt (6) in den Führungsabschnitt (7) übergeht, und
- **dass** sich auf der zweiten Halteseite (10) wenigstens ein Führungskanal (3) unmittelbar an die Führungsöffnung (4) anschließt, dessen lichte Querschnittsfläche der Querschnittsfläche der Führungsöffnung (4) entspricht.

2. Sockelgerät nach Anspruch 1, **dadurch gekennzeichnet, dass** eine Länge des Führungskanals (3) einer Länge des Stützabschnitts (6) entspricht.

3. Sockelgerät nach Anspruch 1 oder 2, **gekennzeichnet durch** wenigstens eine entweder an dem Führungsstab (9) und Führungskanal (3) angreifende oder durch den Führungsstab (9) und Führungskanal (3) gebildete Verdrehsicherung.

4. Sockelgerät nach Anspruch 3, **dadurch gekennzeichnet, dass** der Führungsstab (9) und die Führungsöffnung (4) jeweils eine polygonale Querschnittsfläche aufweisen.

5. Sockelgerät nach Anspruch 4, **dadurch gekennzeichnet, dass** der Führungsstab (9) und die Führungsöffnung (4) jeweils eine trapezförmige Querschnittsfläche aufweisen.

6. Sockelgerät nach einem der vorhergehenden Ansprüche, **dadurch gekennzeichnet, dass** eine äußere Formgebung des Stützabschnitts (6) einer äußeren Formgebung des Führungskanals (3) entspricht.

7. Sockelgerät nach einem der vorhergehenden Ansprüche, **dadurch gekennzeichnet, dass** an der jeweiligen Halteseite (10, 11) der jeweiligen Grundplatte (5, 8) eine Modellaufnahme derart ausgebildet ist, dass das jeweilige Kiefermodell unter Ausbildung eines Presssitzes oder Klemmsitzes zwischen dem Kiefermodell und der Grundplatte teilweise in die Modellaufnahme einfügbar ist.

8. Sockelgerät nach einem der vorhergehenden Ansprüche, **dadurch gekennzeichnet, dass** die erste Modellhalteeinheit (2) und/oder die zweite Modellhalteeinheit (1) monolithisch ausgebildet sind bzw. ist.

9. Sockelgerät nach einem der vorhergehenden Ansprüche, **dadurch gekennzeichnet, dass** die erste Modellhalteeinheit (2) und/oder die zweite Modellhalteeinheit (1) aus einem Kunststoff hergestellt sind bzw. ist.

10. Sockelgerät nach einem der vorhergehenden Ansprüche, **dadurch gekennzeichnet, dass** an wenigstens einer Grundplatte (5, 8) wenigstens eine randseitige Ausnehmung oder eine Durchbrechung ausgebildet ist.

11. Verwendung des Sockelgeräts nach einem der vorhergehenden Ansprüche zum Fixieren eines Oberkiefermodells und eines Unterkiefermodells in einer Stellung relativ zueinander, die einer intraoralen Situation entspricht.
